# EUROPÄISCHE PATENTSCHRIFT

(11) **EP 3 067 768 B1**
(45) Veröffentlichungstag und Bekanntmachung des Hinweises auf die Patenterteilung: **25.04.2018**
(21) Anmeldenummer: 15158589.0
(22) Anmeldetag: 11.03.2015
(51) Int. Cl.: G05B 19/418, G05B 19/05

(54) **Automatisierungseinrichtung und Operator-System**
AUTOMATION DEVICE AND OPERATOR SYSTEM
DISPOSITIF D'AUTOMATISATION ET SYSTÈME OPÉRATEUR

(43) Veröffentlichungstag der Anmeldung: 14.09.2016
(73) Patentinhaber: Siemens Aktiengesellschaft, 80333 München (DE)
(72) Erfinder: Lutz, Benjamin, 76327 Pfinztal (DE)

(56) Entgegenhaltungen:
- EP-A1- 1 947 536
- WO-A2-03/044608
- DE-B3-102005 008 500

## Beschreibung

Die Erfindung betrifft eine Automatisierungseinrichtung mit mindestens einem Automatisierungsgerät und einem Operator-System zur Visualisierung und Bedienung von Schrittketten einer Ablaufsteuerung, wobei während eines RUN-Betriebs des Automatisierungsgerätes aus den Schrittketten erzeugte Objekte verarbeitet werden, wobei die Objekte in das Automatisierungsgerät geladene, mittels eines Continuous Function Chart-Editors erstellte CFC-Funktionen parametrieren und aktivieren und wobei über Prozesswerte und Steuersignale die Interaktion und Verknüpfung zwischen den Objekten und den CFC-Funktionen bewerkstelligt werden. Ferner betrifft die Erfindung ein Operator-System gemäß dem Oberbegriff des Anspruchs 2.

Aus dem Siemens-Katalog "Prozessleitsystem SIMATIC PCS 7, Ausgabe 2014/15, Kapitel 4, ist bekannt, mittels eines auf einem Engineering-System ablauffähigen grafischen Editors in Form eines so genannten "Continuous Function Chart (CFC)-Editors", aus vorgefertigten Bausteinen (Objekten) nach Maßgabe einer zu lösenden Automatisierungsaufgabe eine Automatisierungslösung bzw. ein Anwender- oder Steuerprogramm für ein Automatisierungsgerät zu erstellen. Dazu wählt der Anwender die Bausteine bzw. Objekte, z. B. einen Regler- oder Zähler-Baustein aus einem verfügbaren Bausteinvorrat aus, platziert die Bausteine z. B. per Drag&Drop in einem Funktionsplan (z. B. CFC-Plan) und verschaltet diese per Mausklick miteinander. Unter dem Begriff "verschalten" wird verstanden, dass z. B. für die Kommunikation zwischen den Bausteinen Werte von einem Ausgang zu einem oder mehreren Eingängen übertragen werden. Nachdem der Anwender alle Funktionen im Funktionsplan erstellt hat, erzeugt das Engineering-System mittels des Automatisierungsgerätes lesbare CFC-Automatisierungsobjekte bzw. CFC-Funktionen, die in dieses Automatisierungsgerät geladen und dort im Rahmen der Steuerung eines technischen Prozesses bzw. zur Lösung der Automatisierungsaufgabe verarbeitet werden.

Ferner ist das Engineering-System mit einem weiteren grafischen Editor in Form eines so genannten "Sequential Function Chart (SFC)-Editors" versehen, mittels welchem ein Anwender eine Ablaufsteuerung bzw. ein Rezept zur Steuerung eines Chargenprozesses (Batchprozesses) erstellen kann, beispielsweise ein Rezept zur Herstellung von Kunstharz, Farbstoffen oder Düngemitteln. Dieser SFC-Editor ermöglicht eine grafische Projektierung und Inbetriebnahme der Ablaufsteuerung, wobei aus der Ablaufsteuerung (SFC)Objekte erzeugt werden, die in ein Automatisierungsgerät geladen und dort ausgeführt werden. Diese Ablaufsteuerung ist für eine zustandsgesteuerte oder ereignisgesteuerte Ausführung von Produktionsprozessen auf Basis von Ablaufketten (Schrittketten) vorgesehen. Die Ablaufsteuerung weist gewöhnlich eine Vielzahl derartiger Schrittketten (Sequential Function Charts) auf, die alternativ- und/oder parallelverzweigt ausgebildet sind und die jeweils mehrere Rezeptelemente in Form von Rezeptoperationen oder Rezeptfunktionen, z. B. Dosieren, Heizen oder Rühren, sowie Transitionen umfassen.

Die aus der Ablaufsteuerung bzw. aus den Schrittketten (SFC) erzeugten (SFC)Objekte steuern im Run-Betrieb des oder der Automatisierungsgeräte die aus dem CFC-Plan erzeugten CFC-Funktionen, d. h. die SFC-Objekte parametrieren und aktivieren die untergeordneten CFC-Funktionen, wobei über Prozesswerte und Steuersignale die Interaktion und Verknüpfung zwischen den SFC-Objekten und den CFC-Funktionen bewerkstelligt werden.

Aus Kapitel 5 des genannten Siemens-Katalogs "Prozessleitsystem SIMATIC PCS 7, Ausgabe 2014/15, ist ferner ein OS-Server und mindestens ein OS-Client umfassendes Operator-System bekannt, das einerseits dazu ausgebildet ist, den Ablauf eines zu steuernden Prozesses zu bedienen und zu beobachten und andererseits dazu ausgebildet ist, einen SFC-Plan zu visualisieren und zu bedienen. Diese SFC-Bedienung erlaubt während des RUN-Betriebs allerdings nur Parameteränderungen von bereits projektierten Rezeptelementen der Schrittketten bzw. der Ablaufsteuerung, beispielsweise Parameteränderungen in Form von Sollwertänderungen. Änderungen an einer oder mehreren Schrittketten, z. B. eine Änderung durch Einfügen eines neuen Rezeptelements, ist nur im Rahmen einer Neuprojektierung mittels des Engineering-Systems möglich, wobei der SFC-Plan nach dieser Änderung neu übersetzt und die SFC-Objekte in das Automatisierungsgerät geladen werden müssen. Eine Änderung des SFC-Plans im RUN-Betrieb des Automatisierungsgeräts ist also nicht möglich.
Aus der EP 1 947 536 A1 ist ein Verfahren zur Konfigurationsänderung eines laufenden Automatisierungsgerätes bekannt. Das Automatisierungsgerät weist einen Laufzeitinterpreter zur Auswertung und Umsetzung einer Ablauffolgenbeschreibung auf.
WO 03/044608 A2 offenbart ein Verfahren zum Bedienen eines Feldgerätes. Mittels geeigneter Maßnahmen wird eine sichere und einfache Bedienung des Feldgerätes von einem Bediengerät ermöglicht.
DE 10 2005 008 500 B3 beschreibt ein Verfahren zur Steuerung von Maschinen mittels eines Teileprogramms, das von einem Interpreter einer Steuereinrichtung übersetzt wird. Der Erfindung liegt daher die Aufgabe zugrunde, eine Automatisierungseinrichtung der eingangs genannten Art zu schaffen, mittels der eine Modifikation von Ablaufsteuerungen während des RUN-Betriebs des Automatisierungsgeräts ermöglicht wird. Darüber hinaus ist ein Operator-System gemäß dem Oberbegriff des Anspruchs 2 zu schaffen, welches für eine derartige Automatisierungseinrichtung geeignet ist.

Diese Aufgabe wird im Hinblick auf die Automatisierungseinrichtung durch die im kennzeichenenden Teil des Anspruchs 1 angegebenen, bezüglich des Operator-Systems durch die im kennzeichnenden Teil des Anspruchs 2 angegebenen Maßnahmen gelöst.

Vorteilhaft ist, dass der Zeitaufwand bezüglich der Projektierung, des Test und einer Optimierung einer Ablaufsteuerung verringert wird. Mittels der erfindungsgemäßen Automatisierungseinrichtung ist eine Online-Änderung der Ablaufsteuerung möglich und es ist daher nicht mehr erforderlich, Änderungen der Ablaufsteuerung in einem Engineering-System zu bewerkstelligen, dort zu kompilieren und in das Automatisierungsgerät zu laden.

Bezüglich der Bedienung und Beobachtung eines zu steuernden technischen Prozesses oder einer zu steuernden Anlage gehören die Anlagenfahrer bzw. Operatoren zu den größten Erfahrungsträgern. Sie verfügen somit über umfangreiche Ideen zur Optimierung und Verbesserung der jeweiligen Anlage und der Automatisierungseinrichtung. Viele dieser Ideen entstammen aus praktischen Erfahrungen im Umgang mit der Anlage und nicht aus einem theoretischen Modell, z. B. einem regelungstechnischen Streckenmodell. Um diese Ideen, welche Modifikationen der Ablaufsteuerung erfordern, auf ihren Nutzen zu untersuchen, kann mittels der erfindungsgemäßen Automatisierungseinrichtung auf eine aufwendige Simulationen sowie auf eine aufwendige Re-Projektierung und Re-Engineering der Ablaufsteuerung mit anschließender Übertragung in das Automatisierungsgerät verzichtet werden. Darüber hinaus sind die Anlagenfahrer bzw. Operatoren in der Regel auch nur mit dem Operator-System bezüglich des Bedienens und Beobachtens des Prozesses oder der Anlage vertraut. Arbeiten mit einer Engineering-Software gehört gewöhnlich nicht zu den Aufgaben der Anlagenfahrer. Um das Wissen der Anlagenfahrer im Zuge einer Optimierung optimal einfließen lassen zu können, ist die Ablaufsteuerung im Operator-System ohne tiefgreifende Engineering-Kenntnisse online optimierbar; Kenntnisse im Hinblick auf ein dezidiertes Übersetzen und Herunterladen - wie bei bekannten Automatisierungseinrichtungen mit bekannten Engineering-Systemen sind nicht erforderlich.

Anhand der Zeichnung, in der ein Ausführungsbeispiel der Erfindung veranschaulicht ist, werden im Folgenden die Erfindung, deren Ausgestaltungen sowie Vorteile näher erläutert.

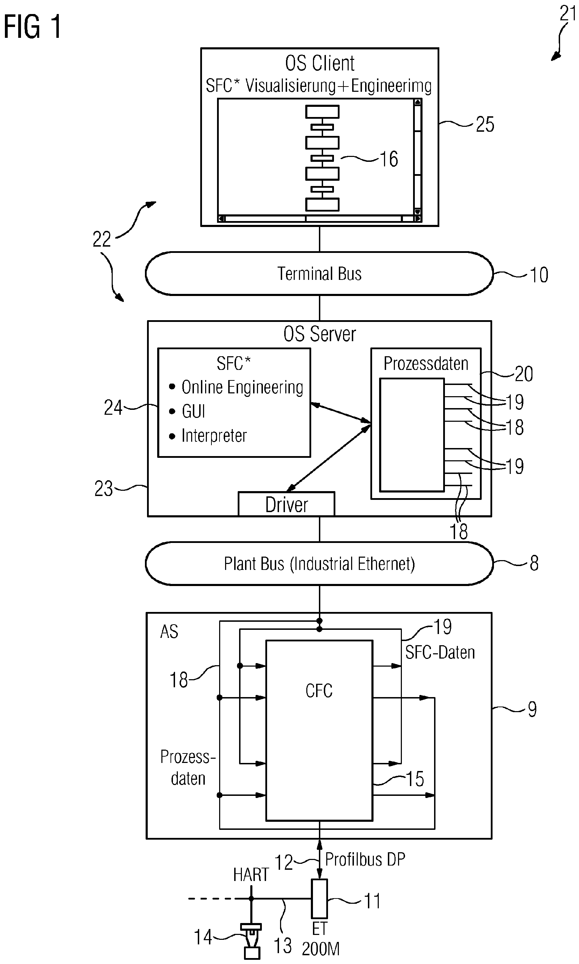

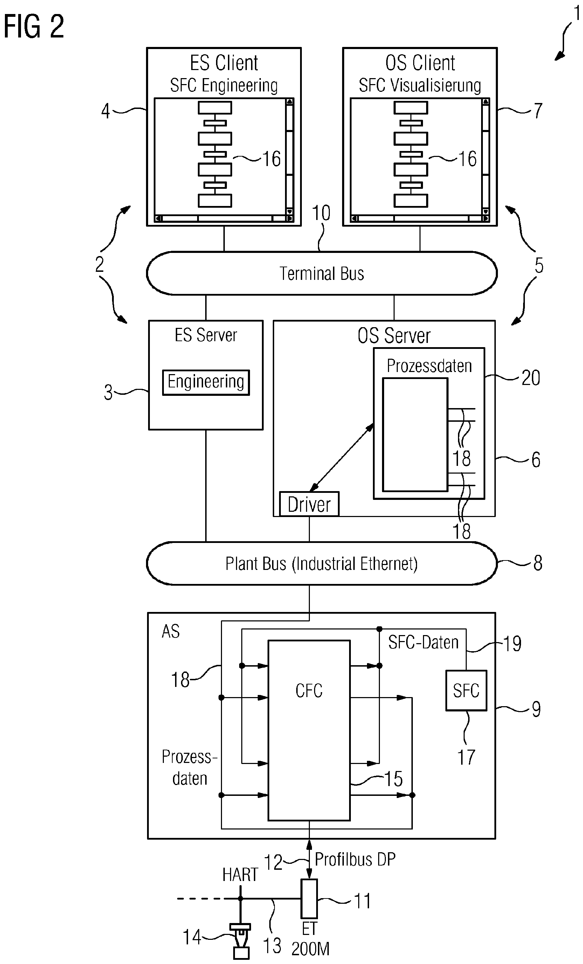

Es zeigen in einer vereinfachten Darstellung
- Figuren 1 und 2: Bestandteile einer Automatisierungseinrichtung.

Die in den Figuren 1 und 2 dargestellten gleichen Teile sind mit gleichen Bezugszeichen versehen.

Es wird zunächst auf Figur 2 verwiesen, in welcher eine an sich bekannte Automatisierungseinrichtung 1 dargestellt ist. Diese Automatisierungseinrichtung 1 umfasst im vorliegenden Ausführungsbeispiel ein Engineering-System 2, welches einen ES-Server 3 und einen ES-Client 4 aufweist, sowie ein Operator-System 5, das aus einem OS-Server 6 und einem OS-Client 7 besteht. Der ES-Server 3 sowie der OS-Server 6 kommunizieren über eine Busverbindung 8 mit einem Automatisierungsgerät 9 der Automatisierungseinrichtung 1, wobei ferner die Server 3, 6 und die Clients 4, 7 über einen weiteren Bus 10 Informationen austauschen. Die Automatisierungseinrichtung 1 weist ferner eine dezentrale Peripherie 11 auf, die über einen Bus 12 an das Automatisierungsgerät 9 angeschlossen ist, wobei die dezentrale Peripherie 11 mittels eines weiteren Busses 13 mit einer Vielzahl von Feldgeräten 14 (Sensoren, Aktoren) verbunden ist.
Mittels eines auf einem Engineering-System 2 ablauffähigen Continuous Function Chart (CFC)-Editors erstellt ein Anwender in gewohnter Art und Weise aus vorgefertigten Bausteinen nach Maßgabe einer zu lösenden Automatisierungsaufgabe grafisch ein Steuerprogramm für das Automatisierungsgerät 9. Dazu wählt der Anwender die Bausteine, z. B. einen Regler- oder Zähler-Baustein, aus einem verfügbaren Bausteinvorrat aus, platziert die Bausteine z. B. per Drag&Drop in einem Funktionsplan (z. B. CFC-Plan) und verschaltet diese per Mausklick miteinander. Nachdem der Anwender alle Funktionen im Funktionsplan erstellt hat, erzeugt das Engineering-System mittels des Automatisierungsgerätes 9 lesbare CFC-Funktionen, die in dieses Automatisierungsgerät 9 geladen und dort im Rahmen der Steuerung eines technischen Prozesses bzw. zur Lösung der Automatisierungsaufgabe verarbeitet werden. Die in das Automatisierungsgerät 9 geladenen und dort während der Prozesssteuerung zu verarbeitenden CFC-Funkionen sind im vorliegenden Ausführungsbeispiel mit 15 (CFC) bezeichnet.
Darüber hinaus erstellt der Anwender in gewohnter Art und Weise mittels eines ebenfalls auf dem Engineering-System 2 ablauffähigen Sequential Continuous Function Chart (SFC)-Editors grafisch eine Ablaufsteuerung (SCF), die gewöhnlich eine Vielzahl von Schrittketten umfasst, die wiederum eine Vielzahl von Rezeptelementen sowie Transitionen aufweisen, z. B. Rezeptelemente in Form von Rezeptoperationen oder Rezeptfunktionen, z. B. Dosieren, Heizen oder Rühren. Im vorliegenden Beispiel wird angenommen, dass ein Anwender eine Ablaufsteuerung erstellt hat, wobei während der Engineering-Phase eine Schrittkette 16 dieser Ablaufsteuerung auf dem ES-Client 4 des Engineering-Systems 2 dargestellt wird. Aus dieser Ablaufsteuerung erzeugt das Engineering-System 2 mittels des Automatisierungsgeräts 9 verarbeitbare Objekte, die das Engineering-System 2 compiliert und in das Automatisierungsgerät 9 lädt. Die in das Automatisierungsgerät 9 geladenen und dort während der Prozesssteuerung zu verarbeitenden Objekte der Schrittkette sind im vorliegenden Ausführungsbeispiel mit 17 (SFC) bezeichnet, wobei während der Prozesssteuerung - also im RUN-Betrieb des Automatisierungsgeräts 9 - die Interaktion und Verknüpfung zwischen den Objekten 17 und den CFC-Funktionen 15 über Prozesswerte 18 und Steuersignale 19 (SFC-Daten) bewerkstelligt werden. Darüber hinaus wird dem Operator während der Prozesssteuerung die Schrittkette 16 auf dem OS-Client 7 dargestellt, wodurch der Operator beobachten kann, welches Rezeptelement der Schrittkette gerade verarbeitet wird. Jedem Schritt der Schrittkette ist eine bestimmte Aktion zugeordnet, welche die CFC-Funktionen 15 parametrieren und aktivieren, wobei dazu entsprechende Steuersignale 19 gesetzt werden. Die Prozesswerte 18 umfassen Prozesseingangswerte (Istwerte), welche Sensoren dem Automatisierungsgerät 9 zuführen und die das Automatisierungsgerät 9 dem OS-Server 6 zur Hinterlegung in einem Prozessabbild 20 übermittelt, sowie Prozessausgangswerte (Sollwerte), die der OS-Server 6 dem Automatisierungsgerät 9 zur Ansteuerung der Aktoren zuführt.

Um während des RUN-Betriebs des Automatisierungsgeräts die Schrittkette 16 und somit die Ablaufsteuerung modifizieren zu können - z. B. durch Einfügen einer weiteren Rezeptoperation "Mischen" -, weist eine Automatisierungseinrichtung 21 ein Operator-System 22 (Figur 1) auf, dessen OS-Server 23 versehen ist mit einem Interpreter zur Interpretation und Abarbeitung der Ablaufsteuerung und zur Ansteuerung der CFC-Funktionen 15 im Automatisierungsgerät 9, ferner eine Engineering-Schnittstelle zum Erstellen der Schrittkette mittels eines auf einem OS-Client 25 des Operator-Systems 22 ablauffähigen SFC-Editors sowie eine Schnittstelle für die Visualisierung und Bedienung der Schrittkette 16 während der Prozesssteuerung. Im Unterschied zur bekannten Verarbeitung der aus der Schrittkette 16 erzeugten SCF-Objekte 17 mittels des Automatisierungsgerätes 9, verarbeitet ein OS-Server 23 des Operator-Systems 22 der Automatisierungseinrichtung 21 während der Prozesssteuerung zu verarbeitenden bzw. ausführbare, mit 24 (SFC*) bezeichnete Objekte der Schrittkette 16. Der OS-Server 23 arbeitet diese SFC*-Objekte 24 interpretativ ab und hinterlegt im Prozessabbild 20 sowohl die Prozesswerte 18 in Form der Prozessausgangswerte (Sollwerte) als auch die SFC-Daten 19. Ferner empfangen die SFC-*Objekte 24 die im Prozessabbild 20 vom Automatisierungsgerät 9 übermittelten Prozesswerte 18 in Form der Prozesseingangswerte (Istwerte), wobei - wie erwähnt - in der beschriebenen Art und Weise die Interaktion und Verknüpfung zwischen diesen SFC*-Objekten 24 und den CFC-Funktionen 15 im Automatisierungsgerät 9 über die Prozesswerte 18 und den SFC-Daten 19 bewerkstelligt werden.

Aufgrund der interpretativen Abarbeitung der SFC*-Objekte (SFC*) im OS-Server 23 wird ein Test (debuggen und optimieren) unmittelbar während der Prozesssteuerung ermöglicht, ohne dass dazu in einem gesonderten Engineering-System ein Compilieren und ein Download in das Automatisierungsgerät ausgeführt werden muss. Die Flexibilität des SFCs* eignet sich darüber hinaus auch besonders für den Laborbetrieb, wenn sich der Fokus auf die Optimierung des Automatisierungsprozesses bzw. auf die Rezeptur durch die Anpassung von Schrittketten oder die Optimierung von Parametern richtet. Während der Prozessteuerung können Optimierungen bewerkstelligt werden, beispielsweise durch Einfügen zusätzlicher Schrittketten, falls chemische Reaktionen aufgrund geänderter Umgebungsbedingungen noch nicht vollständig abgeschlossen wurden oder Parameteranpassungen zur Kompensation von Umgebungseinflüssen oder Rohstoffvarianzen erforderlich sind.

## Patentansprüche

1. Automatisierungseinrichtung mit mindestens einem Automatisierungsgerät (9) und einem Operator-System (22) zur Visualisierung und Bedienung von Schrittketten (SFC) einer Ablaufsteuerung, wobei während eines RUN-Betriebs des Automatisierungsgerätes aus den Schrittketten (16) erzeugte Objekte (24) verarbeitet werden, wobei die Objekte (24) in das Automatisierungsgerät (9) geladene, mittels eines Continuous Function Chart-Editors erstellte CFC-Funktionen (15) parametrieren und aktivieren und wobei über Prozesswerte (18) und Steuersignale (19) die Interaktion und Verknüpfung zwischen den Objekten (24) und den CFC-Funktionen (15) bewerkstelligt werden, **dadurch gekennzeichnet, dass** das Operator-System (22) aufweist:
- einen Server (23), der dazu ausgebildet ist, die Objekte der Schrittketten interpretativ abzuarbeiten und Prozessausgangswerte und die Steuersignale (19) zur Verknüpfung zwischen den Objekten und der CFC-Funktionen (15) in einem Prozessabbild (20) des Servers (23) zu hinterlegen, wobei die Objekte die in dem Prozessabbild (20) vom Automatisierungsgerät (9) übermittelten Prozesseingangswerte empfangen,
- eine Engineering-Schnittstelle zum Modifizieren der Schrittketten (16) und
- eine Schnittstelle für die Visualisierung und Bedienung der Schrittketten (16).

2. Operator-System für eine Automatisierungseinrichtung nach Anspruch 1, wobei
- das Operator-System (22) zur Visualisierung und Bedienung von Schrittketten (16) einer Ablaufsteuerung vorgesehen ist,
- während eines RUN-Betriebs eines Automatisierungsgerätes (9) der Automatisierungseinrichtung (21) aus den Schrittketten (16) erzeugte Objekte (24) verarbeitet werden, wobei die Objekte (24) in das Automatisierungsgerät (9) geladene, mittels eines Continuous Function Chart-Editors erstellte CFC-Funktionen (15) parametrieren und aktivieren und über Prozesswerte (18) und Steuersignale (19) die Interaktion und Verknüpfung zwischen den Objekten (24) und den CFC-Funktionen (15) bewerkstelligt werden,
**dadurch gekennzeichnet, dass** das Operator-System (22) aufweist:
- einen Server (23), der dazu ausgebildet ist, die Objekte der Schrittketten interpretativ abzuarbeiten und die Steuersignale (19) zur Verknüpfung zwischen den Objekten und der CFC-Funktionen (15)in einem Prozessabbild (20) des Servers (23) zu hinterlegen, wobei die Objekte die in dem Prozessabbild (20) vom Automatisierungsgerät (9) übermittelten Prozesseingangswerte empfangen,
- eine Engineering-Schnittstelle zum Modifizieren der Schrittketten (16) und
- eine Schnittstelle für die Visualisierung und Bedienung der Schrittketten (16).

## Claims

1. Automation equipment with at least one automation device (9) and an operator system (22) for the visualisation and operation of sequencers (SFC) of a sequential control, wherein objects (24) created from the sequencer (16) are processed during a RUN operation of the automation device, wherein the objects (24) parameterise and activate CFC functions (15) loaded into the automation device (9) and defined by means of a Continuous Function Chart editor and wherein the interaction and link between the objects (24) and the CFC functions (15) are effected via process values (18) and control signals (19), **characterised in that** the operator system (22) has:
- a server (23), which is configured to process the objects of the sequencer in an interpretive manner and to deposit process output values and the control signals (19) in a process image (20) of the server (23) for the link between the objects and the CFC functions (15), wherein the objects receive the process input values transmitted in the process image (20) by the automation device (9),
- an engineering interface for the modification of the sequencer (16) and
- an interface for the visualisation and operation of the sequencer (16).

2. Operator system for automation equipment according to claim 1, wherein
- the operator system (22) for the visualisation and operation of sequencers (16) of a sequential control is provided,
- objects (24) created from the sequencer (16) are processed during a RUN operation of an automation device (9) of the automation equipment (21), wherein the objects (24) parameterise and activate CFC functions (15) loaded into the automation device (9) and defined by means of a Continuous Function Chart editor and the interaction and link between the objects (24) and the CFC functions (15) are effected via process values (18) and control signals (19),
**characterised in that** the operator system (23) has:
- a server (23), which is configured to process the objects of the sequencer in an interpretive manner and to deposit the control signals (19) in a process image (20) of the server (23) for the link between the objects and the CFC functions (15), wherein the objects receive the process input values transmitted in the process image (20) by the automation device (9),
- an engineering interface for the modification of the sequencer (16) and
- an interface for the visualisation and operation of the sequencer (16).

## Revendications

1. Dispositif d'automatisation, comprenant au moins un appareil (9) d'automatisation et un système (22) opérateur de visualisation et de commande de séquences (SFC) d'une commande de déroulement, dans lequel, pendant un fonctionnement RUN de l'appareil d'automatisation, on traite des objets (24) produits à partir des séquences (16), les objets (24) étant paramétrés et activés au moyen de fonctions (15) CFC chargées dans l'appareil (9) d'automatisation et produites au moyen d'un Continuous Function Chart-Editor et dans lequel on réalise, par l'intermédiaire de valeurs (18) de processus et de signaux (19) de commande, l'interaction et la combinaison entre les objets (24) et les fonctions (15) CFC, **caractérisé en ce que** le système (22) opérateur a :
- un serveur (23) constitué pour traiter en interprétation les objets des séquences et consigner, dans une reproduction (20) de processus du serveur (23), des valeurs de sortie de processus et des signaux (19) de commande de la combinaison entre les objets et les fonctions (15) CFC, les objets recevant les valeurs d'entrée de processus transmis par l'appareil (9) d'automatisation dans la reproduction (20) de processus,
- une interface d'ingénierie pour modifier les séquences (16) et
- une interface de visualisation et de commande des séquences (16).

2. Système opérateur pour un dispositif d'automatisation suivant la revendication 1, dans lequel
- le système (22) opérateur est prévu pour visualiser et commander des séquences (16) d'une commande de déroulement,
- pendant un fonctionnement RUN d'un appareil (9) d'automatisation du dispositif (21) d'automatisation, on traite des objets (24) produits à partir des séquences (16), les objets (24) paramétrant et activant des fonctions (15) CFC chargées dans l'appareil (9) d'automatisation et produites au moyen d'un Continuous Fuction Chart-Editor et l'interaction et la combinaison entre les objets (24) et les fonctions (15) CFC étant effectuées par l'intermédiaire des valeurs (18) de processus et des signaux (19) de commande,
**caractérisé en ce que** le système (22) opérateur a :
- un serveur (23) constitué pour traiter en interprétation les objets des séquences et consigner, dans une reproduction (20) de processus du serveur (23), des valeurs de sortie de processus et des signaux (19) de commande de la combinaison entre les objets et les fonctions (15) CFC, les objets recevant les valeurs d'entrée de processus transmis par l'appareil (9) d'automatisation dans la reproduction (20) de processus,
- une interface d'ingénierie pour modifier les séquences (16) et
- une interface de visualisation et de commande des séquences (16).
